# EUROPEAN PATENT APPLICATION

(11) **EP 2 902 452 A1**
(43) Date of publication of application: **05.08.2015**
(21) Application number: 14153415.6
(22) Date of filing: 31.01.2014
(51) Int. Cl.: C09D 5/00, C09D 5/16

(54) **Antifouling composition**

(71) Applicant: Jotun A/S, 3202 Sandefjord (NO)
(72) Inventor: Winander, Cecilia, 3202 Sandefjord (NO)
(74) Representative: Campbell, Neil Boyd

(57) **Abstract**

A marine antifouling coating composition comprising 1) a polyoxalate polymer with a Mw of at least 4000 g/mol, wherein said polyoxalate comprises (i) a residue of an oxalate monomer selected from oxalic acid or a diester derivative thereof, (ii) a residue of a second monomer selected from a cyclic diester or cyclic diacid and (iii) a residue of a third monomer which is a diol, 2) a curing agent and optionally 3) a marine antifouling agent.

## Description

### Field of the Invention

The present invention relates to marine antifouling coating compositions, more specifically to marine antifouling coating compositions comprising a particular class of polyoxalate as a binder. The invention further relates to kits suitable for the preparation of the antifouling coating compositions and to surfaces coated with the antifouling coating compositions.

### Background

Surfaces that are submerged in seawater are subjected to fouling by marine organisms such as green and brown algae, barnacles, mussels, tube worms and the like. On marine constructions such as vessels, oil platforms, buoys, etc. such fouling is undesired and has economical consequences. The fouling may lead to biological degradation of the surface, increased load and accelerated corrosion. On vessels the fouling will increase the frictional resistance which will cause reduced speed and/or increased fuel consumption. It can also result in reduced manoeuvrability.

To prevent settlement and growth of marine organisms antifouling paints are used. These paints generally comprise a film-forming binder, together with different components such as pigments, fillers, solvents and biologically active substances.

The most successful antifouling coating system on the market until 2003 was a tributyltin (TBT) self-polishing copolymer system. The binder system for these antifouling coatings was a linear acrylic copolymer with tributyltin pendant groups. In seawater the polymer was gradually hydrolysed releasing tributyltin, which is an effective biocide. The remaining acrylic copolymer, now containing carboxylic acid groups, became sufficiently soluble or dispersible in seawater to be washed out or eroded away from the coating surface. This self-polishing effect provided a controlled release of the biologically active compounds in the coating resulting in excellent antifouling efficiency and smooth surfaces and hence reduced frictional resistance.

The IMO Convention "International Convention on the Control of Harmful Anti-fouling Systems on Ships" of 2001 prohibited the application of new TBT containing antifouling coatings from 2003 and TBT containing antifouling coatings are prohibited on ship hulls from 2008.

In recent years new antifouling coating systems have been developed and introduced as a consequence of the TBT ban. One broad group of biocidal antifouling coatings on the market today is the self-polishing antifouling coatings which mimic the TBT self-polishing copolymer coatings. Those antifouling coatings are based on (meth)acrylic copolymers having pendant hydrolysable groups without biocidal properties. The hydrolysis mechanism is the same as in the TBT containing copolymers. This gives the same controlled dissolution of the polymers and thereby the controlled release of antifouling compounds from the coating film, resulting in similar performance as the TBT containing antifouling coating systems. The most successful self-polishing antifouling systems today are based on silyl ester functional (meth)acrylic copolymers. These coating compositions are for example described in, EP 0 646 630, EP 0 802 243, EP 1 342 756, EP 1 479 737, EP 1 641 862, WO 00/77102, WO 03/070832 and WO 03/080747.

The above mentioned antifouling coating systems degrade by hydrolysis of pendant groups on the polymer backbone, which results in a water erodable polymer. The hydrolysis of the pendant groups on the polymer backbone results in the formation of carboxylic acid salts which make the polymer hydrophilic and thereby erodable. A certain amount of hydrolysable groups are needed to get sufficient hydrophilicity and an erodable polymer after hydrolysis. Silyl ester copolymer technology is expensive.

Another way of obtaining water erodable polymers is by introducing hydrolysable groups in the polymer backbone, resulting in degradation of the polymer structure, which gives erosion of the polymer film or coating film. Polyanhydrides are a class of polymers that degrade by backbone hydrolysis. The polyanhydrides are well documented for their surface degradation properties. Surface degradation is one of the most important factors for obtaining a successful antifouling coating. The use of specific aromatic polyanhydrides as binders in antifouling coating compositions is, for example, described in WO 2004/096927.

However, the anhydride group is extremely labile in the presence of moisture and it is therefore difficult to design a coating system based on polyanhydrides that exhibits a slow, controlled hydrolysis for use in antifouling coatings. Accordingly, the polyanhydrides used for antifouling coating compositions generally have a high content of aromatic units in order to control the hydrolysis.

In recent years, polyoxalates have emerged as a class of polymers that are well suited for use as binders in antifouling coatings. Backbone hydrolysis in these compounds is more controlled than for the polyanhydrides. Because of the two adjacent carbonyl groups in the oxalate unit, the ester group is activated and labile towards hydrolysis. Polyoxalates also have better solubility in common organic solvents than polyanhydrides.

The use of self polishing binders which hydrolyse in the polymer backbone make it possible to obtain erodable crosslinked polymers and high molecular weight polymers. One of the greatest advantages of the polyoxalate technology over the current commercial solution, the silyl technology, is that the cost of the binder is much lower.

Furthermore, solvents levels, and consequently VOC (volatile organic compounds) levels, can be reduced when using polyoxalates compared with silyl copolymers. Legislation controlling levels of VOC is now enforced in many countries. Due to this it is highly preferred that any antifouling coating has a VOC content of less than 400 g/L.

Polyoxalates are not new compounds. In EP-A-1505097 various polyoxalates are mentioned as being suitable for the formation of shaped articles or films. Moreover, the use of polyoxalates as self-polishing binders in anti-fouling coating compositions is reported in WO 2009/100908. Although these compounds have shown promise in this area of technology, problems still exist in developing a polymer of this class which possesses both good polishing properties and acceptable film hardness.

It is important for a binder used in an antifouling coating composition to have good polishing properties in order to prevent fouling. If the binder displays no polishing, there is very little hydrolysis or release of the biocide and it is ineffective as an antifouling coating. It is, however, also important that the polishing is not too rapid and does not display exponential rate behaviour since this is indicative of bulk hydrolysis rather than polishing. Bulk hydrolysis causes unwanted swelling of the coating. A linear polishing rate is desirable in order for the antifouling coating to last and for its properties to be predictable during the sailing interval of the vessel. Moreover, it is necessary that the coating composition is resistant to swelling as this will lead to eventual collapse of the paint film. In this regard, the inventors have found that the use of an oxalate monomer alone increases the risk of such swelling. Furthermore, the coating needs a sufficient hardness in order to be resistant to the mechanical impact to which vessels and other marine constructions are often exposed. Developing a polyoxalate binder which fulfils some or all of these criteria has proved challenging. Ideally, a good balance of all these properties is desirable.

The object of the present invention is to provide a cured antifouling coating composition which comprises a polyoxalate binder, which coating composition offers improvements in properties compared to those previously known in the art. In particular, the invention relates to a cured coating which combines good polishing properties, in particular a substantially linear polishing rate, with acceptable film hardness. Surprisingly, some or all of these objectives may be attained by the use of a specific class of polyoxalates as the binder in a cured antifouling coating composition.

### Summary of the Invention

Thus, viewed from one aspect the invention provides a marine antifouling coating composition comprising:
1) a polyoxalate polymer with a Mw of at least 4000 g/mol, wherein said polyoxalate comprises:
   (i) a residue of an oxalate monomer selected from oxalic acid or a diester derivative thereof;
   (ii) a residue of a second monomer selected from a cyclic diester or cyclic diacid; and
   (iii) a residue of a third monomer which is a diol; and
2) a curing agent.

Alternatively viewed, the invention provides a composition comprising:
1) a polyoxalate polymer with a Mw of at least 4000 g/mol, wherein said polyoxalate comprises:
   (i) a residue of an oxalate monomer selected from oxalic acid or a diester derivative thereof;
   (ii) a residue of a second monomer selected from a cyclic diester or cyclic diacid; and
   (iii) a residue of a third monomer which is a diol; and
2) a curing agent.

Viewed from another aspect the invention provides a marine antifouling coating composition comprising:
1) a polyoxalate polymer with a Mw of at least 4000 g/mol, wherein said polyoxalate comprises:
   (i) a residue of an oxalate monomer selected from oxalic acid or a diester derivative thereof;
   (ii) a residue of a second monomer selected from a cyclic diester or cyclic diacid; and
   (iii) a residue of a third monomer which is a diol; and
2) a curing agent; and optionally
3) a marine antifouling agent.

Viewed from another aspect, the invention provides a cured marine antifouling coating composition comprising a:
1) a polyoxalate polymer with a Mw of at least 4000 g/mol, wherein said polyoxalate comprises:
   (i) a residue of an oxalate monomer selected from oxalic acid or a diester derivative thereof;
   (ii) a residue of a second monomer selected from a cyclic diester or cyclic diacid; and
   (iii) a residue of a third monomer which is a diol; and
2) optionally a marine antifouling agent;
   which composition has been cured using a curing agent.

Viewed from another aspect the invention provides a process for the preparation of a marine anti-fouling coating composition comprising polymerising
(i) an oxalate monomer selected from oxalic acid or a diester derivative thereof;
(ii) a second monomer which is a cyclic diester or cyclic diacid; and
(iii) a third monomer which is a diol so as to form a polyoxalate polymer with a Mw of at least 4000 g/mol; and blending said polyoxalate with a curing agent and optionally a marine antifouling agent.

Viewed from another aspect the invention provides a process for the preparation of a marine anti-fouling coating composition comprising polymerising
(i) an oxalate monomer selected from oxalic acid or a diester derivative thereof;
(ii) a second monomer which is a cyclic diester or cyclic diacid; and
(iii) a third monomer which is a diol so as to form a polyoxalate polymer with a Mw of at least 4000 g/mol; and blending said polyoxalate with a curing agent and optionally a marine antifouling agent and curing the composition.

Viewed from another aspect the invention provides a process for protecting an object from fouling comprising coating at least a part of said object which is subject to fouling with an anti-fouling coating composition as hereinbefore described and curing the composition.

Viewed from another aspect the invention provides an object coated with a cured anti-fouling coating composition as hereinbefore defined.

Viewed from another aspect the invention provides kit suitable for the preparation of a marine antifouling coating composition comprising a first part (A) comprising:
1) a polyoxalate polymer with a Mw of at least 4000 g/mol, wherein said polyoxalate comprises:
   (i) a residue of an oxalate monomer selected from oxalic acid or a diester derivative thereof;
   (ii) a residue of a second monomer selected from a cyclic diester or cyclic diacid; and
   (iii) a residue of a third monomer which is a diol; and
      optionally a marine antifouling agent; and
      a second part (B) comprising a curing agent.

### Definitions

It will be clear that the polyoxalate polymer is formed through the polymerisation of the various monomers identified herein. The term monomer residue refers to the actual repeating unit present in the polymer backbone which is formed from the monomer during the polymerisation process. A residue of an oxalate monomer selected from oxalic acid or a diester thereof implies therefore the backbone residue obtained from the polymerisation of oxalic acid or a diester derivative thereof.

The term cyclic diester or a cyclic diacid refers to a compound in which two ester groups or two carboxylic acids are directly bound to the same ring system. It does not therefore cover a linear diester in which the terminal ester groups are cyclic for example, such as PhO₂CCH₂CH₂CO₂Ph.

### Detailed Description

The antifouling coating composition of the invention comprises at least two components as hereinbefore defined: a polyoxalate and a curing agent. The polyoxalate performs the role of the binder in the composition. The term binder is a term of this art. The binder is the actual film forming component of an anti-fouling composition. The binder imparts adhesion and binds the components of the composition together.

### Polyoxalate

The polyoxalate which is used in the invention may be a linear or branched polymer. It is a copolymer formed from at least three different monomers, e.g. a random copolymer or block copolymer. It will be appreciated that any polyoxalate of the invention comprises sufficient repeating units in order to achieve a Mw of at least 4000 g/mol.

The polyoxalate of the invention is formed from the polymerisation of an oxalate monomer, selected from oxalic acid or a diester derivative thereof (i) and at least two further monomers. The second monomer (ii) is selected from the group of a cyclic diacid and a cyclic diester and the third monomer (iii) is a diol.

The polyoxalates of the present invention can be prepared by condensation polymerisation using any of various methods known and used in the art.

Optionally the polycondensation is carried out in the presence of a catalyst. The catalyst preferably comprises at least one member selected from compounds of magnesium, calcium, titanium, zirconium, vanadium, manganese, iron, cobalt, zinc, aluminium, germanium, tin, phosphorus and antimony. Among the compounds organometallic compounds are preferred, more preferably organic titanium compounds and organic tin compounds. Examples of organic titanium compounds include titanium alkoxides, such as triisopropyl titanate, titanium tetraisopropoxide, titanium glycolates, titanium butoxide, hexyleneglycol titanate and tetraisooctyl titanate. Examples of organic tin compounds include tin 2-ethylhexanoate, dibutyltin dilaurate, monobutyltin tris(2-ethylhexanoate), dibutyltin oxide, dioctyltin oxide and monobutyltin oxide.

The oxalate monomer used in the polymerisation reaction is oxalic acid or a diester derivative thereof. Esters may be alkyl esters, alkenyl esters, cycloalkyl esters or aryl esters. Examples of suitable diester derivatives of oxalic acid include those of Formula (I) below: 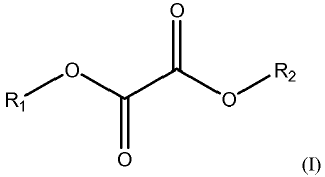 wherein R₁ and R₂ are each independently selected from a straight or branched chain C₁₋₂₀ alkyl group, preferably C₁₋₁₀ alkyl group, most preferably C₁₋₆ alkyl group (e.g. methyl or ethyl); a straight or branched chain C₂₋₁₀ alkenyl group, preferably C₂₋₆ alkenyl group; a C₆₋₂₀ aryl group, preferably C₆₋₁₀ aryl group; a C₇₋₂₀ arylalkyl group, preferably C₇₋₁₂ arylalkyl group and a C₃₋₂₀ cycloalkyl group, preferably C₄₋₁₅ cycloalkyl group, especially C₅₋₁₀ cycloalkyl group. R₁ and R₂ may be the same or different, preferably the same. In any arylalkyl group the link to the O atom may be from the alkyl portion or aryl portion of the substituent, preferably therefore forming tolyl or benzyl.

Preferably, the oxalate monomer (i) is selected from the group of oxalic acid and dialkyl oxalates. Dialkyl oxalates are especially preferred, e.g. diC₁₋₁₀alkyl oxalates. Example dialkyl oxalates include dimethyl oxalate, diethyl oxalate, dipropyl oxalate and dibutyl oxalate, especially diethyl oxalate, i.e. the compound of Formula (I) wherein R₁ and R₂ are both ethyl.

In all embodiments of the invention, unless otherwise stated, any alkyl group, alkenyl group, cyclic group or aryl group may be optionally substituted with one or more functional groups, e.g. ester, acid, amino or hydroxyl groups. Ideally however, no such groups are present.

It is within the scope of the invention for a mixture of oxalate monomers (i) to be used in the preparation of the polyoxalates of the invention. Where a mixture is employed, the use of two dialkyl oxalates is preferred. Ideally, however, only one oxalate monomer is used in the polymerisation reaction, e.g. a diester derivative of oxalic acid, such as a dialkyl oxalate as hereinbefore defined.

Preferably, the oxalate monomer (i) is present in an amount of greater than 20 mol%, preferably greater than 25 mol% (e.g. 25 to 40 mol%), relative to the amount of monomer in total. In some embodiments, the oxalate monomer is present in an amount of up to 45 mol%, preferably up to 40 mol%, more preferably up to 35 mol%, relative to the amount of monomer(s) in total. This amount of oxalate monomer reflects the total mol% of all oxalate monomers (i) present in the polyoxalate of the invention (i.e. summing monomer contents if more than one oxalate is employed).

In addition to a residue of the oxalate monomer (i), the polyoxalate used in the invention comprises a residue of a second monomer (ii) selected from a cyclic diester or a cyclic diacid. It has surprisingly been found that the use of this specific type of comonomer leads to an increase in hardness of the polyoxalate polymer. Thus, the antifouling coating compositions of the invention, and any paint film produced therefrom, possess particularly attractive film hardness properties. The addition of this second monomer is also of value as it decreases the risk of swelling and collapse of the paint film, compared to one prepared using only an oxalate monomer.

Examples of cyclic dicarboxylic acids include those of Formula II shown below: 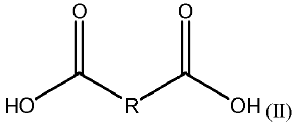 wherein R is a saturated, unsaturated or aromatic C₃-C₈ ring, preferably a C₅-C₆ ring, optionally comprising one or more heteroatoms selected from the group consisting of N, O and S. Examples of heterocyclic rings include furan (e.g. giving the compound furan-2,5-dicarboxylic acid). It will be appreciated that if a heteroatom is present in the ring that the two carboxyl groups bind on carbon atoms in the ring.

Most preferably R is a phenyl group. The two carboxylic acid groups may occupy any position on the ring. For example, where R is a C₆ ring, the two carboxylic acid groups may be *ortho, meta* or *para* with respect to each other, preferably meta.

Examples of cyclic diesters include those of Formula III shown below: 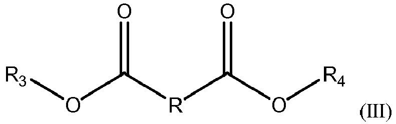 wherein R is a saturated, unsaturated or aromatic C₃-C₈ ring, preferably a C₅-C₆ ring, optionally comprising one or more heteroatoms selected from the group consisting of N, O and S. It will be appreciated that if a heteroatom is present in the ring that the two ester groups bind on carbon atoms in the ring. The two ester groups may occupy any position on the ring. For example, where R is a C₆ ring, the two ester groups may be *ortho, meta* or *para* with respect to each other, preferably meta. R₃ and R₄ in Formula (III) are each independently a straight or branched chain C₁₋₂₀ alkyl group, preferably a C₁₋₁₀ alkyl group, more preferably C₁₋₆ alkyl group, more preferably a C₁₋₄ alkyl group, especially methyl; a straight or branched chain C₂₋₁₀ alkenyl group, preferably C₂₋₆ alkenyl group; a C₆₋₂₀ aryl group, a C₇₋₂₀ arylalkyl group, preferably C₇₋₁₂ arylalkyl group, preferably C₆₋₁₀ aryl group; and a C₃₋₂₀ cycloalkyl group, preferably C₄₋₁₅ cycloalkyl group, especially C₅₋₁₀ cycloalkyl group. R₃ and R₄ may be the same or different, preferably the same.

Preferably, the cyclic diester is an aromatic diester, such as one of Formula IV shown below: 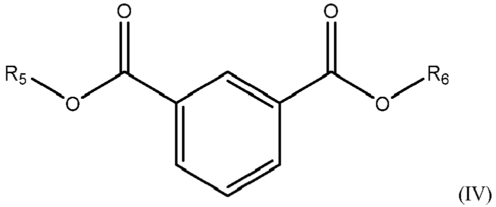 wherein R₅ and R₆ are each independently a straight or branched chain C₁₋₂₀ alkyl group, preferably a C₁₋₁₀ alkyl group, more preferably C₁₋₆ alkyl group, more preferably a C₁₋₄ alkyl group, especially methyl. R₅ and R₆ may be the same or different, preferably the same. A particularly preferred cyclic diester is dimethyl isophthalate. Analogues of compounds of Formula IV, wherein the two ester groups on the phenyl ring are *ortho* or *para* to each other are equally applicable for use in the present invention.

As discussed above, in all embodiments of the invention, unless otherwise stated, any alkyl group, alkenyl group, cyclic group or aryl group may be optionally substituted with one or more functional groups, e.g. ester, acid, amino or hydroxyl groups. Ideally however, no such groups are present. It is particularly preferred if the second monomer (ii) does not contain an hydroxyl functional group in addition to a carboxylic acid functional group. In a most preferred embodiment, the second monomer (ii) is dimethyl isophthalate.

It is within the scope of the invention for more than one monomer (ii) to be used in the preparation of the polyoxalates of the invention. Ideally, however, only one monomer (ii) is used.

Preferably, the second monomer (ii) is present in an amount of greater than 5 mol%, preferably greater than 12 mol%, more preferably greater than 14 mol% relative to the amount of monomers in total. In some embodiments, the second monomer (ii) is present in an amount of up to 30 mol%, preferably up to 25 mol%, more preferably up to 23 mol% relative to the amount of monomers in total. These values reflect the total mol% of all monomers (ii) present in the polyoxalate of the invention (i.e. summing monomer contents if more than one is employed).

It is preferred that the mol% of the second monomer does not exceed these upper values as too high a level of this component may lead to diminished polishing properties.

The polyoxalate of the invention further comprises a residue of a third monomer (iii) which is a diol. There can be one diol monomer or more than one diol monomer. The use of two or three diol monomers is envisaged. It is expressly preferred if there is more than one diol monomer used in the manufacture of the polyoxalate.

Preferably, the third monomer (iii) is present in an amount of greater than 30 mol%, preferably greater than 40 mol%, more preferably greater than 45 mol% relative to the amount of monomers in total. In some embodiments, the third monomer (iii) is present in an amount of up to 60 mol%, preferably up to 55 mol% relative to the amount monomers in total. These figures are based on the total diol content in the polyoxalate (i.e. summing monomer contents if more than one diol is employed).

Examples of diols include saturated aliphatic and saturated cycloaliphatic diols, unsaturated aliphatic diols or aromatic diols. Saturated aliphatic and cycloaliphatic diols are preferred. Ideally, a mixture of saturated aliphatic and saturated cycloaliphatic diols are used. It is particularly preferred to use at least one cycloaliphatic diol as this is thought to contribute to the attainment of good hardness.

Preferred diols include C₃₋₂₀ aliphatic or C₄₋₂₀-cycloaliphatic diols such as 1,3-propanediol, 1,2-butanediol, 1,3-butanediol, 1,4-butanediol, 2,3-butanediol, 1,2-pentanediol, 1,4-pentanediol, 1,5-pentanediol, 2,4-pentanediol, 1,2-hexanediol, 1,5-hexanediol, 1,6-hexanediol, 2,5-hexanediol, 1,7-heptanediol, 1,2-octanediol, 1,8-octanediol, 1,9-nonanediol, 1,10-decanediol, 1,2-dodecanediol, 1,12-dodecanediol, 1,14-tetradecanediol, 1,2-hexadecanediol, 1,16-hexadecanediol, 2,2-dimethyl-1,3-propanediol (neopentyl glycol), 3-methyl-1,3-butanediol, 3-methyl-1,5-pentanediol, 2-methyl-2,4-pentanediol, 2,3-dimethyl-2,3-butanediol, 2,2-diethyl-1,3-propanediol, 2,4-dimethyl-2,4-pentanediol, 2-methyl-2-propyl-1,3-propanediol, 2,2,4-trimethyl-1,3-pentanediol, 2,5-dimethyl-2,5-hexanediol, 2-ethyl-1,3-hexandiol, 2-butyl-2-ethyl-1,3-propanediol, 2,2-dibutyl-1,3-propanediol, 1,2-cyclohexanediol, 1,3-cyclohexanediol, 1,4-cyclohexandiol, 1,2-cyclohexanedimethanol, 1,3-cyclohexanedimethanol, 1,4-cyclohexanedimethanol, cyclododecanediol, dipropylene glycol, triethylene glycol, pentaethylene glycol, hexaethylene glycol, hydroxypivalyl hydroxypivalate, 3,9-bis(1,1-dimethyl-2-hydroxyethyl)-2,4,8,10-tetraoxaspiro[5.5]undecane (spiroglycol), 2,2,4,4-tetramethyl-1,3-cyclobutanediol and isohexides, such as 1,4:3,6-dianhydro-D-glucitol (isosorbide), 1,4:3,6-dianhydro-D-mannitol (isomannide) and 1,4:3,6-dianhydro-L-iditol (isoidide), and mixtures thereof. Preferred diols are C₃₋₁₀ aliphatic or C₅₋₁₀-cycloaliphatic diols. In one embodiment, the use of hydrogenated bisphenol A is avoided

Preferred unsaturated aliphatic diols are C₄₋₂₀ unsaturated aliphatic diols such as 2-butene-1,4-diol, 3-butene-1,2-diol, 3-hexene-1,6-diol and monoolein.

Preferred aromatic diols are C₆₋₂₀ aromatic diols such as hydroquinone, methylhydroquinone, resorcinol, 2-methylresorcinol, pyrocatechol, 1,2-benzenedimethanol, 1,3-benzenedimethanol, 1,4-benzenedimethanol, bisphenol A, bisphenol E, bisphenol F, bisphenol M, bisphenol P, bisphenol S, bisphenol Z, bisphenol AF, bisphenol AP, 4,4'-dihydroxybenzophenone, 4,4'-biphenol, 2,2'-biphenol, 1,2-dihydroxynaphthalene, 1,4-dihydroxynaphthalene, 1,5-dihydroxynaphthalene, 1,6-dihydroxynaphthalene, 1,7-dihydroxynaphthalene, 2,3-dihydroxynaphthalene, 2,6-dihydroxynaphthalene, 2,7-dihydroxynaphthalene, and 1,8-naphthalenedimethanol.

It is particularly preferred if the diol is selected from one or more of 2-butyl-2-ethyl-1,3-propanediol, 1,4-cyclohexanedimethanol, 1,6-hexanediol, 3,9-bis(1,1-dimethyl-2-hydroxyethyl)-2,4,8,10-tetraoxaspiro[5.5]undecane (spiroglycol), neopentyl glycol and 2,2,4,4-tetramethyl-1,3-cyclobutanediol.

It will be appreciated that in addition to the oxalate monomer (i), the second monomer (ii) and the third monomer (iii), the polyoxalate used in the antifouling coating compositions of the invention may further comprise additional monomers. As noted previously, the polyoxalate may contain more than one oxalate monomer (i), second monomer (ii) or third monomer (iii) Preferably, no other monomers are present than those covered by definitions i), ii) and iii).

The starting materials for the preparation of the polyoxalates are preferably used in a molar ratio between the oxalate monomer(s) and the second monomer(s) of 4:1 to 1:2, preferably 3:1 to 1:1, e.g. 2:1. Preferably, the oxalate monomer is in excess relative to the second monomer. In some embodiments, the second monomer is in excess. Preferable, the molar ratio between the total amount of monomers (i) and (ii) and total amount of diol monomers (iii) is 90:100 to 100:90, preferably 95:100 to 100:95, most preferably 100: 100.

The polyoxalate polymer architecture will influence the polymer properties. Branching in polymers and "star" shaped polymers are examples of useful structural variables that can be used advantageously to modify polymer properties such as solubility in organic solvents, miscibility in polymer blends, crystallinity of the polymer and mechanical properties.

In order to obtain branching or star structure in the polyoxalates, the polycondensation may be carried out in the presence of a compound with more than two functional groups, e.g. three functional groups that can take part in the polymerisation reaction. Examples of suitable compounds include polyols, e.g. C₃₋₂₀ polyols such as glycerol, trimethylolmethane, trimethylolethane, trimethylolpropane, 1,2,4-butanetriol, 1,2,6-hexanetriol, erythritol, pentaerythritol, di(trimethylolpropane) 1,2,7,8-octanetetrol triglycerol, dipentaerythritol, pyrogallol and phloroglucinol;
polycarboxylic acids, e.g. C₄₋₂₀polycarboxylic acids such as trimellitic acid, trimesic acid and pyromellitic acid;
alkyl esters of polycarboxylic acid such as trimethyl trimellitate; and
anhydrides of polycarboxylic acid such as trimellitic anhydride and pyromellitic dianhydride. The term "poly" is used in relation to these branching monomers to mean the presence of 3 or more functional groups (i.e. acid groups, hydroxyl groups etc) in the molecule.

Examples of other suitable polyfunctional compounds include malic acid, tartaric acid and citric acid.

Polyols with more than two hydroxyl groups are the preferred compounds for obtaining branched and star-shaped polyoxalates. The amount of any branching reactant, e.g. polyol should preferably be 10 mol% or less of the total amount of that reactant type, e.g. of the diols/polyols combined. Too much branching leads to gelling and a composition which cannot be applied to an object.

Optionally, other functional compounds can be included as comonomers to adjust the polymer properties of the polyoxalates. Such compounds can be used to adjust parameters such as hydrolysis rate and mechanical properties. These functional compounds preferably possess two reactive functional groups e.g. two ester, acid, amino or hydroxyl groups or mixtures thereof and will be called bifunctional compounds. These compounds can form additional monomers in the polymerisation process. Examples of suitable bifunctional compounds include:
alkyl esters of dicarboxylic acids such as dimethyl terephthalate, dimethyl isophthalate, dimethyl phthalate, dimethyl malonate, dimethyl isobutylmalonate, dimethyl succinate, dimethyl glutarate, dimethyl adipate, dimethyl pimelate, dimethyl suberate, dimethyl azelate, dimethyl sebacate, dimethyl brassylate, dimethyl glutaconate, diethyl malonate, diethyl methylmalonate, diethyl succinate, diethyl glutarate, diethyl adipate, diethyl pimelate, diethyl suberate, diethyl azelate, diethyl sebacate, dibutyl succinate, dibutyl adipate and dibutyl sebacate;
dicarboxylic acids such as terephthalic acid, isophthalic acid, phthalic acid, 1,4-phenylenediacetic acid, 1,3-phenylenediacetic acid, 1,2-phenylenediacetic acid, cyclohexanedicarboxylic acid, maleic acid, fumaric acid, malonic acid , isobutylmalonic acid , succinic acid, glutaric acid , adipic acid, pimelic acid , suberic acid , azelaic acid, sebacic acid , dodecanoic acid, brassylic acid, glutaconic acid and dimer fatty acids;
dicarboxylic acid anhydrides such as succinic anhydride, maleic anhydride, citraconic anhydride, glutaric anhydride, diglycolic anhydride, phthalic anhydride, tetrahydrophthalic anhydride, hexahydrophthalic anhydride, 5-norbornene-2,3-dicarboxylic anhydride and 1,8-naphthalic anhydride;
alkyl esters of hydroxyl functional carboxylic acids such as, methyl 3-hydroxybenzoate, methyl 4-hydroxybenzoate, methyl vanillate, methyl 4-hydroxyphenylacetate, ethyl 3-hydroxybenzoate, ethyl 4-hydroxybenzoate, methyl 3-hydroxybutyrate, methyl 2-hydroxyisobutyrate, methyl 10-hydroxydecanoate, ethyl 3-hydroxybutyrate, ethyl 2-hydroxyisobutyrate, ethyl 2-hydroxyhexanoate and ethyl 6-hydroxyhexanoate;
hydroxyl functional carboxylic acids such as salicylic acid, 3-hydroxybenzoic acid, 4-hydroxybenzoic acid, vanillic acid, 2-hydroxyphenylacetic acid, 3-hydroxyphenylacetic acid, 4-hydroxyphenylacetic acid, glycolic acid, 3-hydroxybutyric acid, 2-hydroxyisobutyric acid and ricinoleic acid;
diamines such as 1,2-ethanediamine, 1,2-propanediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,12-dodecanediamine, 2-methyl-1,5-pentanediamine, 2-butyl-2-ethyl-1,5-pentanediamine, 2,2,4- and 2,4,4-trimethyl-1,6-hexanediamine, O,O'-bis(3-aminopropyl)ethylene glycol, O,O'-bis(3-aminopropyl)diethylene glycol, 1,2-diaminocyclohexane, 1,4-diaminocyclohexane, 1,2-phenylenediamine, 1,3-phenylenediamine, 1,4-phenylenediamine, 1,3-bis(aminomethyl)benzene, 1,4-bis(aminomethyl)benzene, 1,4-diaminonaphthalene, 1,5-diaminonaphthalene, 1,8-diaminonaphthalene, 4,4'-methylenedianiline, 4,4'-oxydianiline and 1,1,1-tris(aminomethyl)ethane.

Any alkyl ester of dicarboxylic acid, dicarboxylic acid anhydrides, diamines, hydroxyl functional carboxylic acid, alkyl ester of hydroxyl functional carboxylic acid or dicarboxylic acid used herein may have up to 20 carbon atoms.

Polyoxalate copolymers are obtained by mixing all starting materials before polymerisation. By mixing all reactants, the polyoxalate which forms is typically a statistical random polymer of all the monomers used (i.e. the amount of each monomer incorporated essentially reflects the amount of each monomer in the starting mixture). Polyoxalate block polymers, which are less favoured, are obtained either by subsequent addition of starting materials during the polymerisation process after an initial polymerisation of only two monomers or preparation of block polymers that are linked together.

The polymerisation conditions can be widely varied although typically temperatures of 100 to 250°C are employed, e.g. 120 to 220°C. During condensation polymerisation a condensate (normally water or an alcohol) is formed. This is preferably removed by distillation as the polymerisation continues. This can be achieved under reduced pressure. The polymerisation is preferable carried out in an inert atmosphere, e.g. nitrogen.

The polyoxalates of the present invention have a weight average molecular weight (Mw) of at least 4000 g/mol, preferably at least 4500 g/mol, more preferably at least 5000 g/mol, especially greater than 8000 g/mol. In an especially preferred embodiment, values of more than 10,000 g/mol are preferred. The weight average molecular weight is preferably up to 30,000 g/mol, such as up to 20,000 g/mol. It has generally been found that the higher value of Mw, such as more than 10,000 g/mol offer advantages in terms of hardness performance.

There is however a trade off here as increasing the Mw too far increases viscosity and means that more solvent is required to ensure that the coating composition can be applied. More solvent increases volatile organic content which is not desired.

The molecular weight of the polyoxalate is important in terms of obtaining a film with sufficient hardness. The present inventors have surprisingly found that polyoxalates with weight average molecular weights within the ranges quoted herein possess sufficient hardness. High molecular weights are associated with high viscosities which in turn leads to high levels of undesirable volatile organic compounds. The production time required to manufacture a polyoxalate with high molecular weight is also longer. The longer the production time the higher the production cost of the polymer.

In a further preferred embodiment of the invention, the polyoxalate is amorphous. By amorphous is meant that the polyoxalate does not have a discernable melting point, i.e. it is not crystalline. The use of an amorphous polyoxalate increases the solubility in the organic solvent typically used in the antifouling composition so the use of amorphous polyoxalates is preferred.

The polyoxalate of the invention should preferably have a glass transition temperature (Tg) in the range 0 -100 °C, more preferably 1-60 °C, especially 5-50 °C.

In a further preferred embodiment, the polyoxalate of the invention has an hydroxyl (OH) number in the range 0 to 100 mg KOH/g polymer, preferably 1 to 80 mg KOH/g polymer, most preferably 4-50 mg KOH/g polymer.

It is preferred that any polyoxalate used in this invention has a solubility of at least 50 wt% in the solvent used in the antifouling composition, preferably at least 75 wt% in the solvent such as at least 95 wt% in the solvent. For example therefore at least 1 kg of polyoxalate should dissolve in 1 kg of solvent. Preferred solvents are discussed below. Xylene is especially preferred.

It is preferred if the polyoxalate forms at least 3 wt%, e.g. at least 5 wt%, perhaps at least 10 wt% of the antifouling coating composition, such as at least 20 wt%. The skilled man will appreciate that the level of polyoxalate binder employed will depend on the amount of antifouling compound employed, e.g. the amount of cuprous oxide. The polyoxalate may therefore form 3 to 40 wt% of the antifouling coating composition.

### Curing Agent

The polyoxalate binder is combined with a curing agent in the antifouling coating compositions of the invention. Polyoxalates have functional end groups that react with curing agents such as chain extenders or crosslinkers. Curing the antifouling coating compositions contributes to improved hardness.

Examples of curing agents well known in the art include, for example, monomeric isocyanates, polyisocyanates and isocyanate prepolymers. Polyisocyanates are preferred over monomeric isocyanates because of lower toxicity. Polyisocyanates can for example be based on diphenylmethane diisocyanate (MDI), toluene diisocyanate (TDI), hexamethylene diisocyanate (HDI) and isophorone diisocyanate (IPDI) chemistry. These are, for example, supplied under the tradename Desmodur by Bayer Material Science and Tolonate by Vencorex. Examples of polyisocyanates are Desmodur N3400, Desmodur N75, Desmodur XP2580, Desmodur Z4470, Desmodur XP2565 and Desmodur VL, supplied by Bayer Material Science.

Polyisocyanates can be made with different NCO-functionality. The NCO-functionality is the amount of NCO-groups per polyisocyanate molecule or isocyanate prepolymer molecule. Polyisocyanates with different NCO-functionality can be used.

The curing agent is preferably present in an amount of 0.8-1.5 equivalents (equiv) NCO groups relative the amount of hydroxyl groups, preferably 0.9-1.4 equiv, more preferably 0.95-1.3 equiv, even more preferably 1-1.2 equiv.

The curing agent is preferably present in an amount of between 0.005 and 0.5 wt% relative to the polyoxalate, preferably 0.01 to 0.3 wt%, more preferably 0.01 to 0.2 wt%.

In addition, a curing catalyst can be used. Examples of such catalysts are tin catalysts, e.g. dibutyltin dilaurate.

The resulting cured coating film will generally have improved hydrolysis and mechanical properties. Curable coatings are often used to provide an antifouling coating composition with reduced levels of volatile organic compounds (VOC) and sufficiently low viscosity in order to be applied by common application methods.

The functionality of the end-groups will depend on the starting materials, the ratio between the starting materials and the process of preparation. The end groups can easily be modified to other functional groups suitable for a wide range of curing reactions. Examples of curable end groups include hydroxyl groups, ethylenically unsaturated groups and epoxy groups.

Polyoxalates, especially those prepared with an excess of diols in the polycondensation reaction, can have hydroxyl end-groups. These end-groups are reactive with curing agents such as monomeric isocyanates, polyisocyanates and isocyanate prepolymers.

Epoxy groups may be introduced, for example, by reacting hydroxyl groups in the polyoxalate with epichlorohydrin.

Ethylenically unsaturated groups such as (meth)acrylate groups may be introduced, for example, by reacting the hydroxyl groups in the polyoxalate with ethylenically unsaturated carboxylic acids, such as acrylic acid or methacrylic acid.

The term polyoxalate is used herein therefore to cover compounds which either inherently contain curable end groups or are modified to contain curable end groups. Compounds which have been modified to contain curable end groups may be referred to specifically as end group modified polyoxalates.

It will be appreciated that mixing of the polyoxalate polymer and the curing agent is carried out shortly before application of the coating to an object, e.g. an hour or less before coating. It is preferred therefore if the curing agent is supplied separately to the rest of the anti-fouling coating composition to prevent curing before the coating has been applied to the object. Hence the coating composition of the invention can be supplied as a multipack (preferably two pack) formulation.

Viewed from another aspect therefore the invention provides a kit comprising (I) a polyoxalate as described herein and (II) a curing agent. It would preferably be supplied with instructions on mixing the components shortly before application.

It has been surprisingly found that the addition of a curing agent to the higher Mw polyoxalates claimed herein can improve polishing properties relative to the uncured polymer. Specifically, more predictable, linear polishing rates are observed on curing.

### Composition

The antifouling coating composition of the invention should preferably have a solids content above 45 wt%, e.g. above 50 wt%, such as above 54 wt%.

Preferably the antifouling coating composition of the invention (i.e. containing a curing agent) should have a content of volatile organic compounds (VOC) less than 420 g/L, more preferably less than 410 g/L, such as less than 400 g/L, especially less than 395 g/L. VOC content can be calculated (ASTM D5201-01) or measured, preferably measured.

The antifouling coating compositions of the invention display an improved balance of hardness and polishing properties compared to compositions of the prior art.

In preferred embodiments, the antifouling coating composition of the invention has a hardness of at least 11 oscillations , preferably at least 15 oscillations when measured after the paint film has been dried at 50 °C for 72 hours.

The polyoxalates of the present invention will degrade in sea water and release compounds with structural units similar or identical to the starting materials. It will be understood that the degradation reactions which the polyoxalates of the invention undergo is a hydrolysis reaction which occurs in the polymer backbone, i.e. the hydrolysable bonds are present in the polymer backbone. Starting materials which are biologically active towards marine organisms may give polyoxalates which act as anti-fouling agents themselves. Preferably however, the starting materials are chosen from compounds that give polyoxalates that degrade to components that are not biologically active towards marine organisms. In such a scenario, the anti-fouling coating composition of the invention may need to contain at least one compound capable of preventing fouling on an object, e.g. a marine anti-fouling agent (sometimes referred to as a biologically active agent) especially a biocide.

Therefore, in a preferably embodiment, the antifouling coating composition of the present invention further comprises one or more marine anti-fouling agents. Even if the antifouling coating composition of the present invention comprises a biologically active polyoxalate, it may additionally contain one or more marine anti-fouling agents.

Preferably, therefore, the antifouling coating compositions of the invention further comprise at least one marine anti-fouling agent, preferably a biocide.

By marine anti-fouling agent is meant any chemical compound that prevents the settlement of marine organisms on a surface, and/or prevents the growth of marine organisms on a surface and/or encourages the dislodgement of marine organisms from a surface. Examples of inorganic marine antifouling agents include copper and copper compounds such as copper oxides, e.g. cuprous oxide and cupric oxide; copper alloys, e.g. copper-nickel alloys; copper salts, e.g. copper thiocyanate, copper sulphide; and barium metaborate.

Examples of organometallic marine antifouling agents include zinc 2-pyridinethiol-1-oxide [zinc pyrithione]; organocopper compounds such as copper 2-pyridinethiol-1-oxide [copper pyrithione], copper acetate, copper naphthenate, copper 8-quinolinonate [oxine-copper], copper nonylphenolsulfonate, copper bis(ethylenediamine)bis(dodecylbenzensulfonate) and copper bis(pentachlorophenolate); dithiocarbamate compounds such as zinc bis(dimethyldithiocarbamate) [ziram], zinc ethylenebis(dithiocarbamate) [zineb], manganese ethylenebis(dithiocarbamate) [maneb] and manganese ethylenebis(dithiocarbamate) complexed with zinc salt [mancozeb].

Examples of organic marine antifouling agents include heterocyclic compounds such as 2-(*tert*-butylamino)-4-(cyclopropylamino)-6-(methylthio)-1,3,5-triazine [cybutryne], 4,5-dichloro-2-*n*-octyl-4-isothiazolin-3-one, 1,2-benzisothiazolin-3-one [DCOIT], 2-(thiocyanatomethylthio)-1,3-benzothiazole [benthiazole], 3-benzo[b]thien-2-yl-5,6-dihydro-1,4,2-oxathiazine 4-oxide [bethoxazin] and 2,3,5,6-tetrachloro-4-(methylsulphonyl)pyridine; urea derivatives such as 3-(3,4-dichlorophenyl)-1,1-dimethylurea [diuron]; amides and imides of carboxylic acids, sulphonic acids and sulphenic acids such as *N*-(dichlorofluoromethylthio)phthalimide, *N-*dichlorofluoromethylthio-*N',N'*-dimethyl-*N*-phenylsulfamide [dichlofluanid], *N-*dichlorofluoromethylthio-*N',N'*-dimethyl-*N*-p-tolylsulfamide [tolylfluanid] and *N-*(2,4,6-trichlorophenyl)maleimide; other organic compounds such as pyridine triphenylborane, amine triphenylborane, 3-iodo-2-propynyl *N*-butylcarbamate [iodocarb], 2,4,5,6-tetrachloroisophthalonitrile [chlorothalonil], *p-*((diiodomethyl)sulphonyl)toluene and 4-bromo-2-(4-chlorophenyl)-5-(trifluoromethyl)-1H-pyrrole-3-carbonitrile [tralopyril].

Other examples of marine anti-fouling agents may be tetraalkylphosphonium halogenides, guanidine derivatives, imidazole containing compounds such as 4-[1-(2,3-dimethylphenyl)ethyl]-1H-imidazole [medetomidine] and derivatives, macrocyclic lactones includes avermectins and derivatives thereof such as ivermectine and spinosyns and derivatives thereof such as spinosad, and enzymes such as oxidase, proteolytically, hemicellulolytically, cellulolytically, lipolytically and amylolytically active enzymes.

Preferred marine anti-fouling agents are cuprous oxide, copper thiocyanate, zinc 2-pyridinethiol-1-oxide, copper 2-pyridinethiol-1-oxide, zinc ethylenebis(dithiocarbamate), 2-(*tert*-butylamino)-4-(cyclopropylamino)-6-(methylthio)-1,3,5-triazine, 4,5-dichloro-2-*n*-octyl-4-isothiazolin-3-one, *N-*dichlorofluoromethylthio-*N',N'*-dimethyl-*N*-phenylsulfamide, *N-*dichlorofluoromethylthio-*N',N'*-dimethyl-*N*-p-tolylsulfamide and 4-bromo-2-(4-chlorophenyl)-5-(trifluoromethyl)-1H-pyrrole-3-carbonitrile.

Optionally the marine anti-fouling agents may be encapsulated or adsorbed on an inert carrier or bonded to other materials for controlled release.

The marine anti-fouling agents may be used alone or in mixtures. The use of these marine anti-fouling agents is known in anti-fouling coatings and their use would be familiar to the skilled man.

The total amount of marine anti-fouling agent in the antifouling compositions of the invention may be in the range 0.5 to 80 wt%, such as 1 to 70 wt%. It will be appreciated that the amount of this component will vary depending on the end use and the marine anti-fouling agent used.

Furthermore, the antifouling coating composition according to the present invention optionally comprises one or more components selected among other binders, pigments, extenders and fillers, stabilizers, dehydrating agents and drying agents, additives, solvents and thinners.

An additional binder can be used to adjust the self-polishing properties and the mechanical properties of the antifouling coating film. Examples of binders that can be used in addition to the polyoxalate in the antifouling coating composition according to the present invention include rosin materials such as wood rosin, tall oil rosin and gum rosin;
rosin derivatives such as hydrogenated and partially hydrogenated rosin, disproportionated rosin, dimerised rosin, polymerised rosin, maleic acid esters, fumaric acid esters, glycerol esters, pentaerythritol esters and other esters of rosin and hydrogenated rosin, copper resinate, zinc resinate, calcium resinate, magnesium resinate and other metal resinates of rosin and polymerised rosin and others as described in WO 97/44401;
resin acids and derivatives thereof such as copal resin and sandarach resin; other carboxylic acid containing compounds such as abietic acid, neoabietic acid, dehydroabietic acid, dihydroabietic acid, tetrahydroabietic acid, secodehydroabietic acid, pimaric acid, paramatrinic acid, isoprimaric acid, levoprimaric acid, agathenedicarboxylic acid, sandaracopimalic acid, lauric acid, stearic acid, isostearic acid, oleic acid, linoleic acid, linolenic acid, isononanoic acid, versatic acid, naphthenic acid, tall oil fatty acid, coconut oil fatty acid, soyabean oil fatty acid and derivatives thereof;
hydrocarbon resins, aliphatic, aromatic or dicyclopentadiene based hydrocarbon resins;
silyl ester copolymers, for example as described in US 4,593,055, EP 0 646 630 and NO 2007 3499;
acid functional polymers of which the acid group is blocked with divalent metals bonded to a monovalent organic residue, for example as described in EP 0 204 456 and EP 0 342 276; or divalent metals bonded to a hydroxyl residue, for example as described in GB 2 311 070 and EP 0 982 324; or amine for example as described in EP 0 529 693;
hydrophilic copolymers for example (meth)acrylate copolymers as described in GB 2 152 947 and poly(N-vinyl pyrrolidone) copolymers and other copolymers as described in EP 0 526 441;
(meth)acrylic polymers and copolymers, such as poly(*n*-butyl acrylate), poly(*n-*butyl acrylate-*co*-isobutyl vinyl ether);
vinyl ether polymers and copolymers, such as poly(methyl vinyl ether), poly(ethyl vinyl ether), poly(isobutyl vinyl ether), poly(vinyl chloride-*co*-isobutyl vinyl ether);
aliphatic polyesters, such as poly(lactic acid), poly(glycolic acid), poly(2-hydroxybutyric acid), poly(3-hydroxybutyric acid), poly(4-hydroxyvaleric acid), polycaprolactone and aliphatic polyester copolymer containing two or more of the units selected from the above mentioned units;
metal containing polyesters for example as described in EP 1 033 392 and EP 1 072 625;
alkyd resins and modified alkyd resins; and
other condensation polymers as described in WO 96/14362.

Dehydrating agents and drying agents contribute to the storage stability of the antifouling coating composition by removing moisture introduced from raw materials, such as pigments and solvents, or water formed by reaction between carboxylic acid compounds and bivalent and trivalent metal compounds in the antifouling coating composition. The dehydrating agents and drying agents that may be used in the antifouling coating composition according to the present invention include organic and inorganic compounds. Examples of dehydrating agents and drying agents include anhydrous calcium sulphate, anhydrous magnesium sulphate, anhydrous sodium sulphate, anhydrous zinc sulphate, molecular sieves and zeolites; orthoesters such as trimethyl orthoformate, triethyl orthoformate, tripropyl orthoformate, triisopropyl orthoformate, tributyl orthoformate, trimethyl orthoacetate and triethyl orthoacetate; ketals; acetals; enolethers; orthoborates such as trimethyl borate, triethyl borate, tripropyl borate, triisopropyl borate, tributyl borate and tri-*tert*-butyl borate.

Other stabilizers that contribute to the storage stability of the antifouling coating composition are monomeric and polymeric carbodiimide compounds, such as bis(2,6-diisopropylphenyl)carbodiimide andpoly(1,3,5-triisopropylphenylene-2,4-carbodiimide) and others as described in patent application EP 12189636.7.

Carbodiimides is preferred as stabilizer. Polymeric carbodiimides is most preferred. Acid scavengers can generally be used..

Examples of pigments are inorganic pigments such as titanium dioxide, iron oxides, zinc oxide, zinc phosphate, graphite and carbon black; organic pigments such as phthalocyanine compounds and azo pigments.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium silicate and silica; polymeric and inorganic microspheres such as uncoated or coated hollow and solid glass beads, uncoated or coated hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, anti-settling agents, plasticizers and solvents.

Examples of reinforcing agents are flakes and fibres. Fibres include natural and synthetic inorganic fibres such as silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide, polyester fibres, polyhydrazide fibres, polyvinylchloride fibres, polyethylene fibres and others as described in WO 00/77102. Preferably, the fibres have an average length of 25 to 2,000 µm and an average thickness of 1 to 50 µm with a ratio between the average length and the average thickness of at least 5.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates and mixtures of thereof.

Examples of plasticizers are chlorinated paraffins, phthalates, phosphate esters, sulphonamides, adipates and epoxidised vegetable oils.

In general, any of these optional components can be present in an amount ranging from 0.1 to 50 wt%, typically 0.20 to 20 wt%, preferably 0.50 to 15 wt% of the antifouling composition. It will be appreciated that the amount of these optional components will vary depending on the end use

It is highly preferred if the antifouling composition contains a solvent. This solvent is preferably volatile and is preferably organic. It may have an evaporation rate of more than 0.05 (n-BuAc = 1). Examples of organic solvents and thinners are aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, tert-butyl acetate, amyl acetate, isoamyl acetate, ethylene glycol methyl ether acetate; ethers such as ethylene glycol dimethyl ether, diethylene glycol dimethyl ether, dibutyl ether, dioxane, tetrahydrofuran, alcohols such as benzyl alcohol; ether alcohols such as 1-methoxy-2-propanol; aliphatic hydrocarbons such as white spirit; and optionally a mixture of two or more solvents and thinners.

Preferred solvents are aromatic solvents, optionally together with butyl acetate, especially xylene and butyl acetate.

The amount of solvent is preferably as low as possible but is preferably sufficient to dissolve the polyoxalate. The solvent content may be up to 50 wt% of the composition, preferably up to 45 wt% of the composition, such as up to 40 wt% but may be as low as 15 wt% or less, e.g. 10 wt% or less. Again, the skilled man will appreciate that the solvent content will vary depending on the other components present and the end use of the coating composition.

Alternatively the coating can be dispersed in an organic non-solvent for the film-forming components in the coating composition or in an aqueous dispersion.

The polyoxalate binder component may form 5 to 40 wt% of the anti-fouling coating composition, preferably 10 to 30 wt%, especially 15 to 28 wt%.

The antifouling coating composition of the invention can be applied to a whole or part of any object surface which is subject to fouling. The surface may be permanently or intermittently underwater (e.g. through tide movement, different cargo loading or swell). The object surface will typically be the hull of a vessel or surface of a fixed marine object such as an oil platform or buoy. Application of the coating composition can be accomplished by any convenient means, e.g. via painting (e.g. with brush or roller) or spraying the coating onto the object. Typically the surface will need to be separated from the seawater to allow coating. The application of the coating can be achieved as conventionally known in the art.

The invention will now be defined with reference to the following non limiting examples and figures.
Figure 1 shows the polishing properties of antifouling coating compositions C1 and C2.
Figure 2 shows the polishing properties of antifouling coating compositions C3 to C6.
Figure 3 shows the polishing properties of antifouling coating compositions C7 to C10.
Figure 4 shows the polishing properties of antifouling coating compositions C11 to C14.
Figure 5 shows the polishing properties of antifouling coating compositions C15 to C17.
Figure 6 shows the polishing properties of antifouling coating compositions C18 to C19
Figure 7 shows the polishing properties of antifouling coating compositions C20 and C21.
Figure 8 shows the polishing properties of antifouling coating compositions C22 and C23.
Figure 9 shows the polishing properties of antifouling coating composition C24.
Figure 10 shows the polishing properties of comparative antifouling coating compositions CC9 to CC12.
Figure 11 shows the polishing properties of antifouling coating compositions C27 to C28 showing effects of curing.
Figure 12 shows the polishing properties of coating compositions C25 and C26 showing the effect of curing.
Figure 13 shows the polishing properties of coating compositions of the prior art

### Determination of polymer solution viscosity

The viscosity of the polymers are determined in accordance with ASTM D2196-10 using a Brookfield DV-I viscometer with LV-2 or LV-4 spindle at 12 rpm. The polymers are temperated to 23.0°C ± 0.5°C before the measurements.

### Determination of solids content of the polymer solutions

The solids content in the polymer solutions are determined in accordance with ISO 3251:2008. A test sample of 0.6 g ± 0.1 g are taken out and dried in a ventilated oven at 150°C for 30 minutes. The weight of the residual material is considered to be the non-volatile matter (NVM). The non-volatile matter content is expressed in weight percent. The value given is the average of three parallels.

### Determination of polymer average molecular weights distribution

The polymers are characterised by Gel Permeation Chromatography (GPC) measurement. The molecular weight distribution (MWD) was determined using a Polymer Laboratories PL-GPC 50 instrument with two PLgel 5 µm Mixed-D columns (300 x 7.5 mm) from Polymer Laboratories in series, tetrahydrofuran (THF) as eluent at ambient temperature and at a constant flow rate of 1 mL/min and with a refractive index (RI) detector. The columns were calibrated using polystyrene standards Easivials PS-H from Polymer Laboratories. The data were processed using Cirrus software from Polymer Labs.

Samples were prepared by dissolving an amount of polymer solution corresponding to 25 mg dry polymer in 5 mL THF. The samples were kept for minimum 3 hours at room temperature prior to sampling for the GPC measurements.

The weight-average molecular weight (Mw), the number-average molecular weight (Mn) and the polydispersity index (PDI), equivalent to Mw/Mn, are reported in the tables.

### Determination of the glass transition temperature

The glass transition temperature (Tg) is obtained by Differential Scanning Calorimetry (DSC) measurements. The DSC measurements were performed on a TA Instruments DSC Q200. Samples were prepared by transfering a small amount of polymer solution to an aluminium pan and dry the samples for minimum 10 h at 50°C and 3 h at 150°C. The samples of approx. 10 mg dry polymer material were measured in open aluminum pans and scans were recorded at a heating and cooling rate of 10°C/min with an empty pan as reference.. The data were processed using Universal Analysis software from TA Instruments. The inflection point of the glass transition range, as defined in ASTM E1356-08, of the second heating is reported as the Tg of the polymers.

### Determination of the hydroxyl number (OH-number) of the polymer solutions

The OH-number is determined according to ASTM E1899-08. All titrations were made using a Titrino plus autotitrator. A LL Solvotrode easyClean was used as pH electrode. The measurements were made in duplicate. Mean values are displayed in the Table.

### Determination of paint viscosity using Cone and Plate viscometer

The viscosity of the antifouling paint compositions are determined according to ISO 2884-1:2006 using a Cone and Plate viscometer set at a temperature of 23°C and providing viscosity measurement range of 0-10 P.

### Coating film hardness - König pendulum hardness

Pendulum hardness tests were performed according to ISO 1522:2006. Each of the antifouling coating compositions was applied to a transparent glass plate (100×200×2 mm) using a film applicator with 300 µm gap size. The coating films were dried for 24 h at 23°C and then 72 h at 50°C. The coating film hardness of the dry coating film was measured at a temperature of 23°C and relative humidity of 50% using a Erichsen 299/300 pendulum hardness tester. The hardness is quantified as the number of pendulum swings to damp the amplitude from 6° to 3°.

### Determination of polishing rates of antifouling coating films in sea water

The polishing rate is determined by measuring the reduction in film thickness of a coating film over time. For this test PVC disc are used. The coating compositions are applied as radial stripes on the disc using a film applicator with a gap size of 300 µm. The thickness of the dry coating films are measured by means of a contact surface profiler. The PVC discs are mounted on a shaft and rotated in a container in which seawater is flowing through. Natural seawater which has been filtered and temperature-adjusted to 25°C ± 2°C is used. The PVC discs are taken out at regular intervals for measuring the film thickness. The discs are rinsed and allowed to dry overnight at room temperature before measuring the film thickness.

### Polymer synthesis

Synthesis of the polyoxalates used in the Examples were made using the following general procedure.

Monomers and catalyst are added in the amounts indicated in the Table to a 250-mL temperature controlled reaction vessel equipped with a mechanical stirrer, nitrogen inlet and distillation equipment. The mixture is slowly heated to 190°C under nitrogen atmosphere while the condensate is distilled off. The heating rate is controlled so the temperature off the distillate does not exceed the boiling point of the condensate. The temperature is kept at 190°C until 80-90% of the theoretical amount of condensate has been removed. The nitrogen inlet is closed and vacuum is applied. The vacuum is gradually decreased to the values shown in the Tables. The temperature is increased to 200°C. The stirring speed is gradually increased. The vacuum is applied for 1-5 hours. The polymer is cooled to 150°C under vacuum. The vacuum is removed and xylene is added to obtain the desired non-volatile matter. The polymer solution is cooled to room temperature.

The amount of hydroxyl groups present in the polymer is calculated from the number-average molecular weight (Mₙ). It is assumed that one end of the polymer chain consists of a hydroxyl group when a 1:1 molar ratio between diesters and diols are used. It is assumed that both ends of the polymer chain consist of a hydroxyl group when a 0.95:1 molar ratio between diesters and diols are used. Based on this the amount of curing agent needed can be calculated. 50 ppm of curing catalyst relative the amount of hydroxyl groups is used.

### Calculation example - amount of curing agent and curing catalyst:

PO-1 (Polymer 1)
Mₙ = 4859 g/mol, wt% solid = 59.3%
If 1 g of polymer solution is used in the paint
n_{OH} = (wt% solid x m_{polymer}) / (Mₙ x 1) (as a 1:1 molar ratio between diesters and diols is used in PO-1) n_{OH}= (0.593 x 1) / (4859 x 1) mol

If 1 equiv of curing agent is used → n_{OH} = n_{NCO} = (0.593 x 1) / (4859 x 1) mol If Desmodur N3400 is used, NCO content = 21.8 wt%, M_{w NCO}= 42.02 g/mol
m_{N3400} = (n_{NCO} x M_{w NCO}) / NCO content
m_{N3400} = (((0.593 x 1) / (4859 x 1)) x 42.02) / 0.218 = 0.024 g
n_{cat} = n_{OH} x 50 ppm

**Table 1. Information of the curing agents used in the examples.**

| Curing agent | Type | NCO-content approx. (%) | Form supplied | NCO-functionality |
|---|---|---|---|---|
| Desmodur XP2565 | IPDI Allophanate | 12.0 | 80% in butylacetate | 2.0 < F < 2.8 |
| Desmodur XP2580 | HDI | 20.0 | 100% | 2.0 < F < 2.8 |
| Desmodur N3400 | HDI | 21.8 | 100% | 2.0 < F < 2.8 |
| Desmodur N75 | HDI Biuret | 16.5 | 75% in butylacetate | F > 3.6 |
| Desmodur VL | MDI Polyiscyanate | 31.5 | 100% | 2.0 < F < 2.8 |

Eleven inventive (PO-1 to PO-11) and three comparative (POC-1 to POC-3) polyoxalate polymers were prepared according to the above method. Data is shown in Table 2. These polymers were used to prepare antifouling coating compositions C1 to C24, shown in Table 3. A comparison of cured and non-cured compositions (C25-C28) is made in Table 4. Comparative composition examples CC-1 to CC-12 are shown in Table 5.

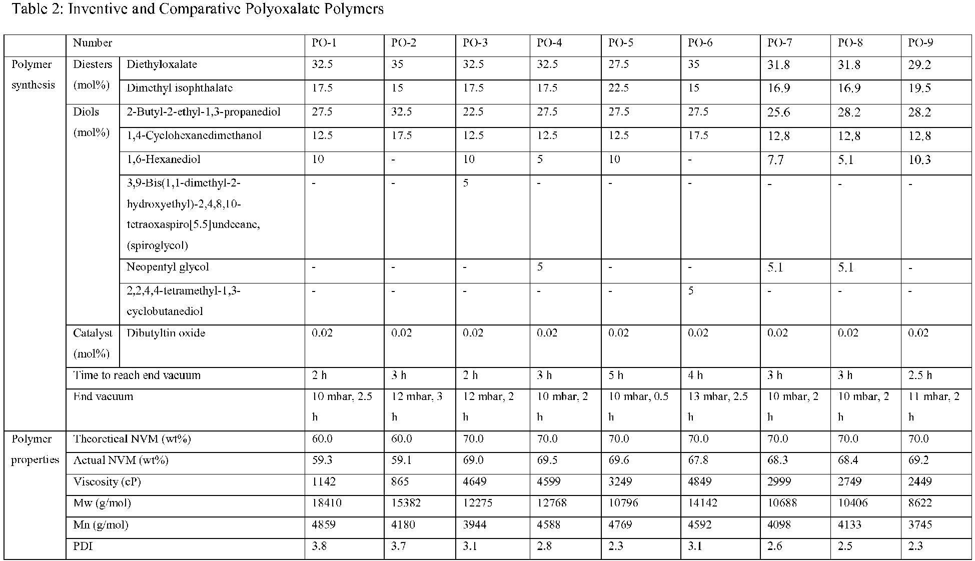

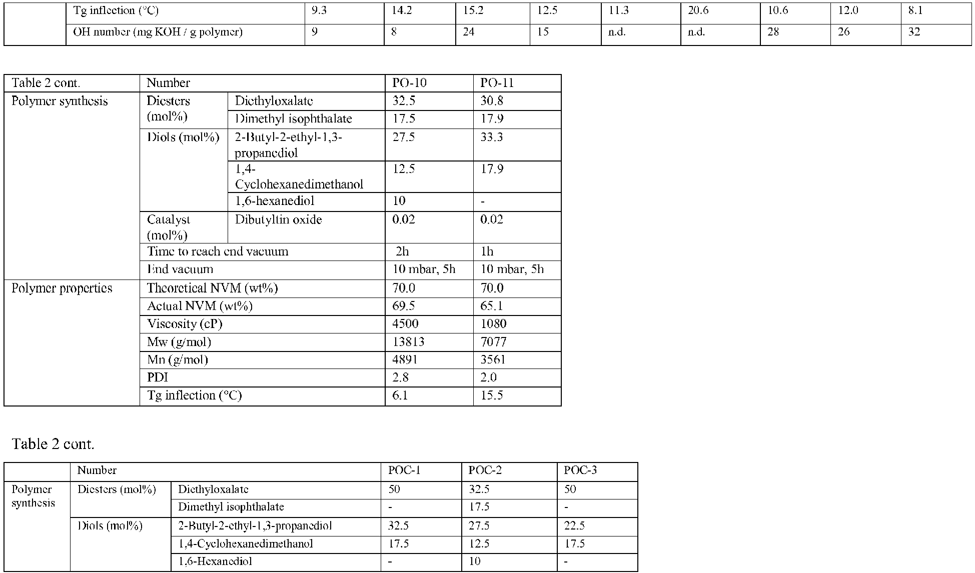

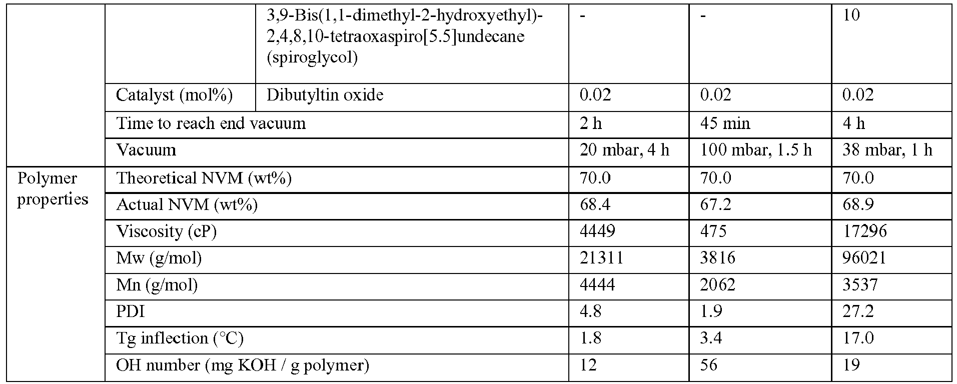

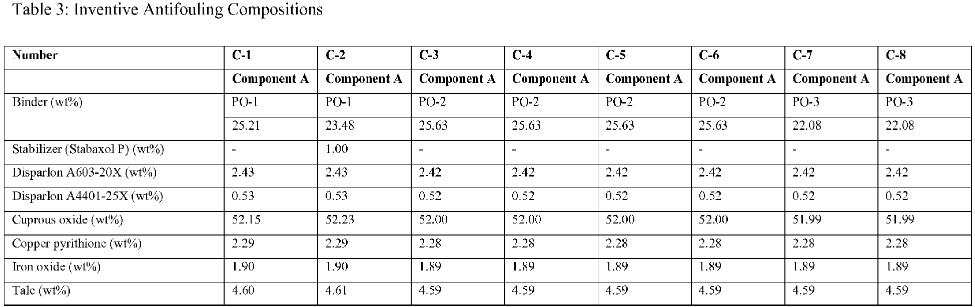

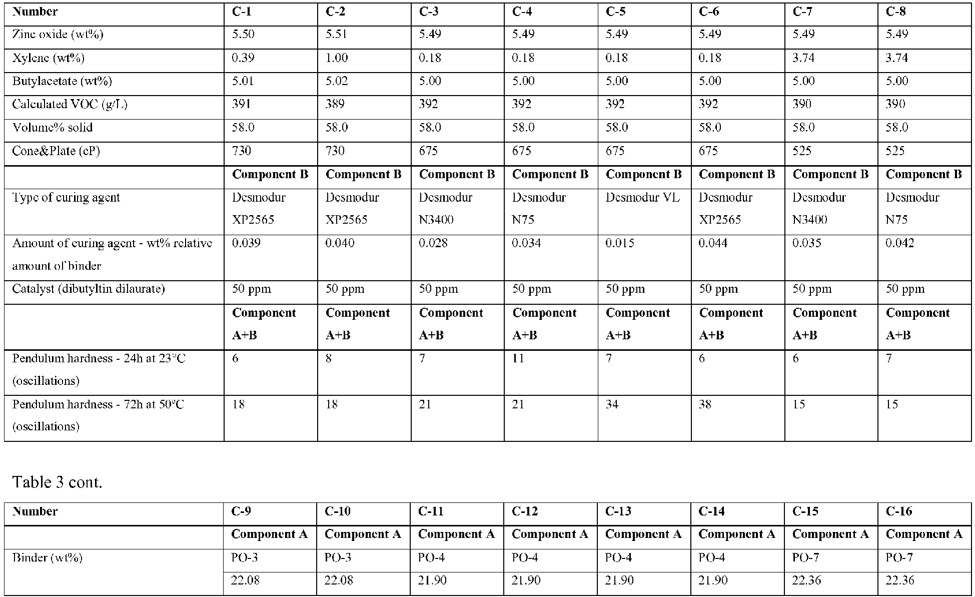

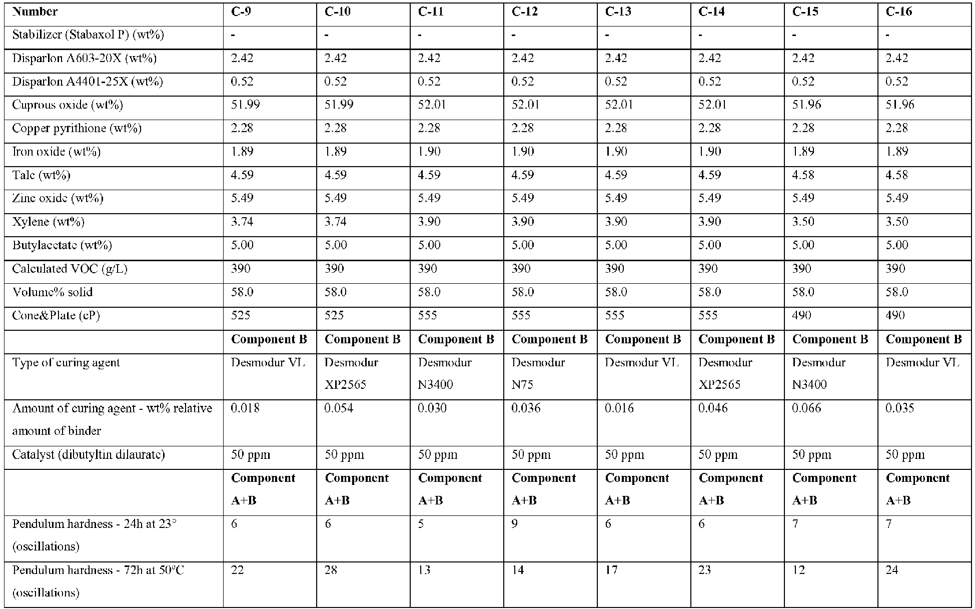

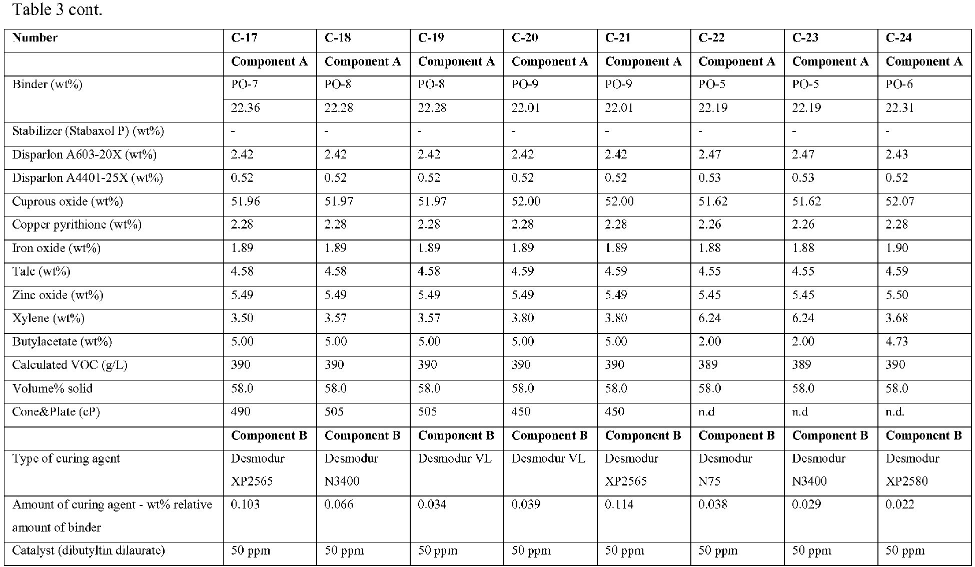

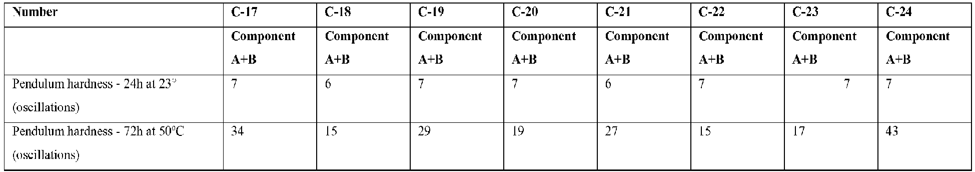

**Table 4 - Comparison of cured and non-cured compositions**

| **Number** | **C-25*** | **C-26** | **C-27*** | **C-28** |
|---|---|---|---|---|
| | **Component A** | **Component A** | **Component A** | **Component A** |
| Binder (wt%) | PO-10 | PO-10 | PO-11 | PO-11 |
| | 21.77 | 21.77 | 24.02 | 24.02 |
| Disparlon A603-20X (wt%) | 2.43 | 2.43 | 2.42 | 2.42 |
| Cuprous oxide (wt%) | 54.27 | 54.27 | 53.96 | 53.96 |
| Copper pyrithione (wt%) | 1.77 | 1.77 | 1.76 | 1.76 |
| Iron oxide (wt%) | 1.61 | 1.61 | 1.60 | 1.60 |
| Talc (wt%) | 4.49 | 4.49 | 4.47 | 4.47 |
| Zinc oxide (wt%) | 4.34 | 4.34 | 4.31 | 4.31 |
| Xylene (wt%) | 5.17 | 5.17 | 3.34 | 3.34 |
| Butylacetate (wt%) | 4.15 | 4.15 | 4.12 | 4.12 |
| Calculated VOC (g/L) | 385 | 385 | 387 | 387 |
| Volume% solid | 58.0 | 58.0 | 58.0 | 58.0 |

| | **Component B** | **Component B** | **Component B** | **Component B** |
|---|---|---|---|---|
| Type of curing agent | - | Desmodur N3400 | - | Desmodur N3400 |
| Amount of curing agent - wt% relative amount of binder | - | 0.029 | - | 0.071 |
| Catalyst (dibutyltin dilaurate) | - | 50 ppm | - | 50 ppm |

| | | | | |
|---|---|---|---|---|
| *Comp. examples | | | | |

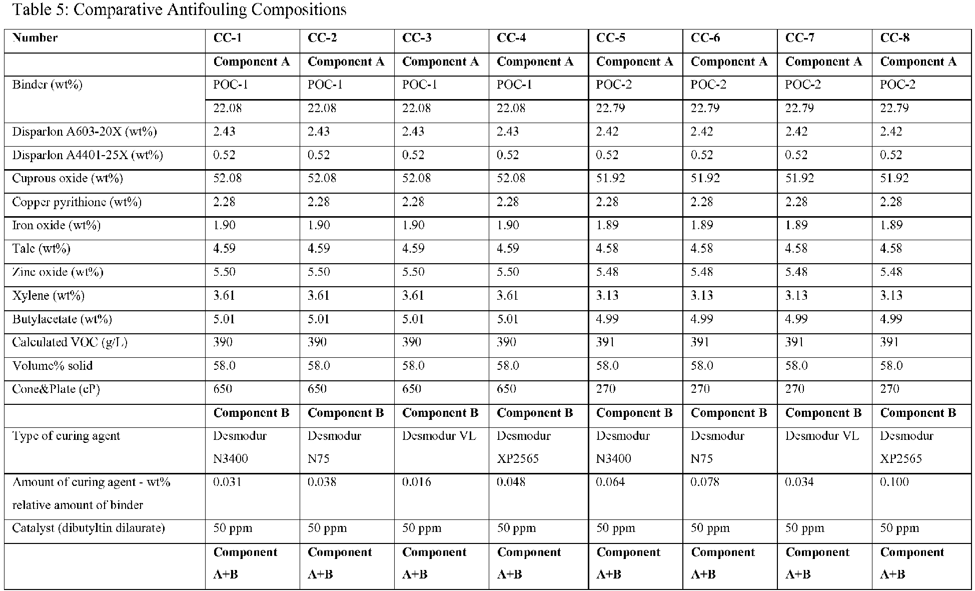

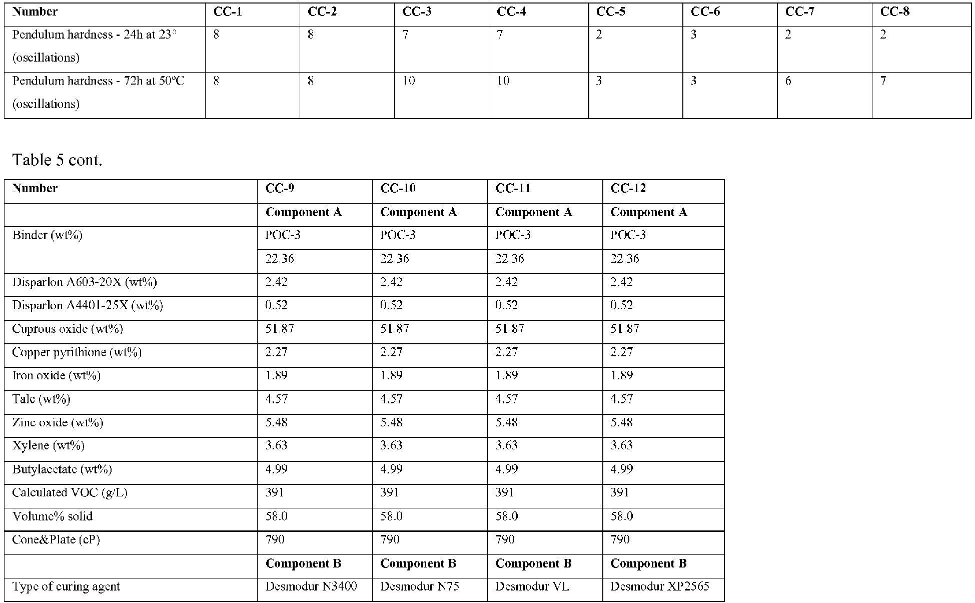

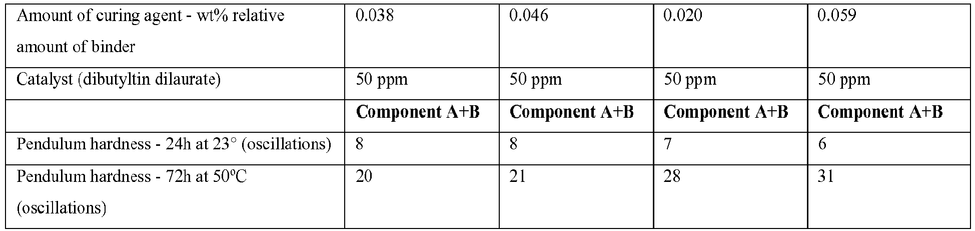

### Polishing Properties

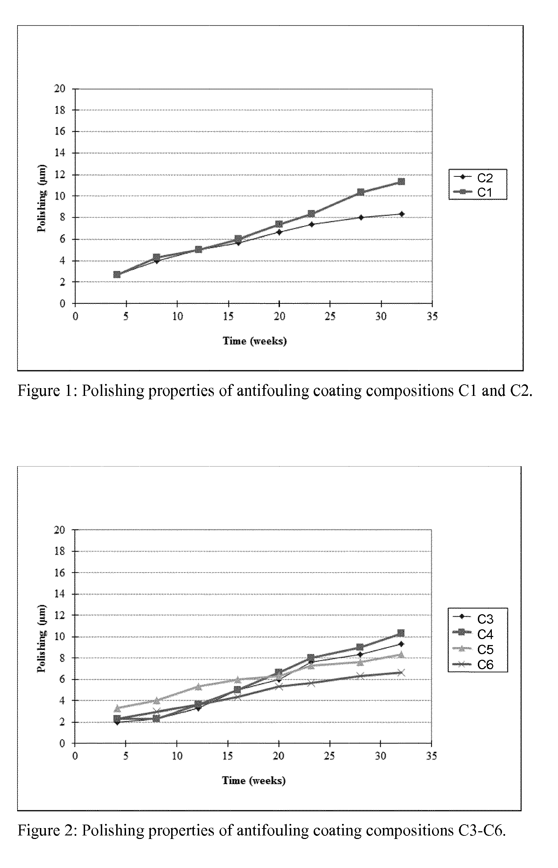

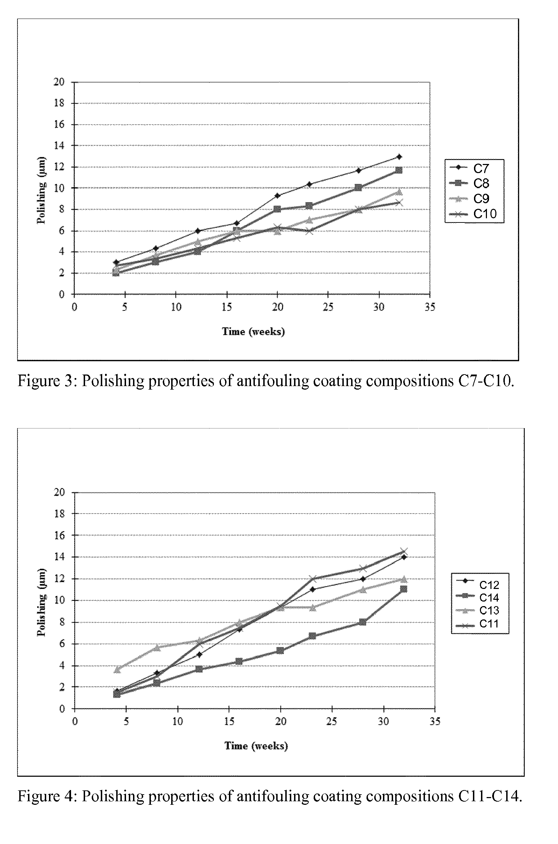

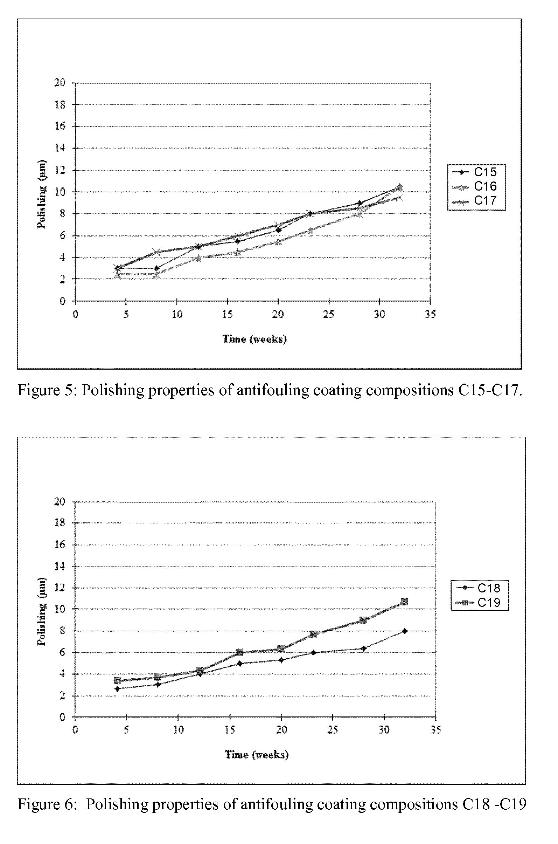

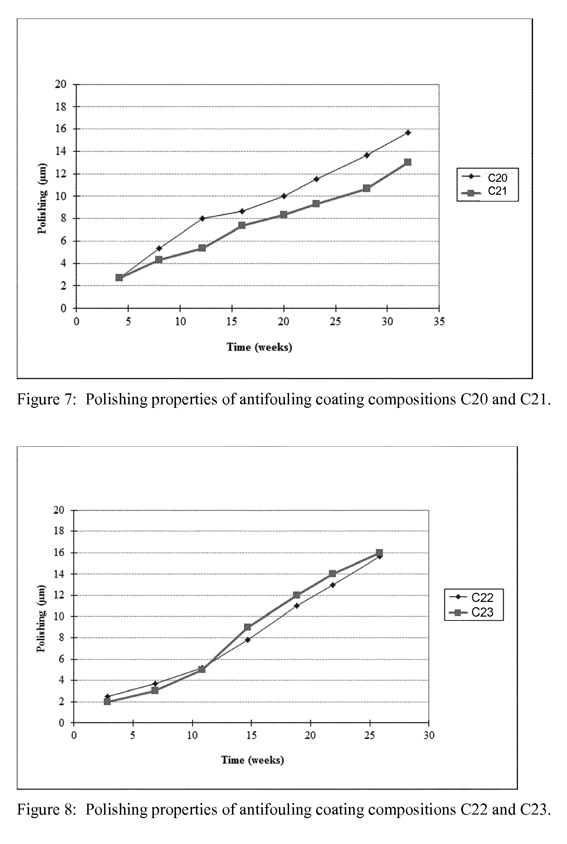

The polishing rates of the inventive and comparative antifouling coating compositions were measured and compared. Results are shown in Figures 1 to 12.

The data show that an antifouling coating composition containing a polyoxalate with high molecular weight comprising only a single diester monomer (POC-1), i.e. diethyloxalate as diester give paint films with insufficient hardness (see the data for compositions CC1 to CC4).

The comparative examples also show that a polyoxalate (POC-2) with low molecular weight (<4000 g/mol) and an additional cyclic diester (dimethyl isophthalate) give insufficient hardness, see the data for compositions CC5 to CC8..

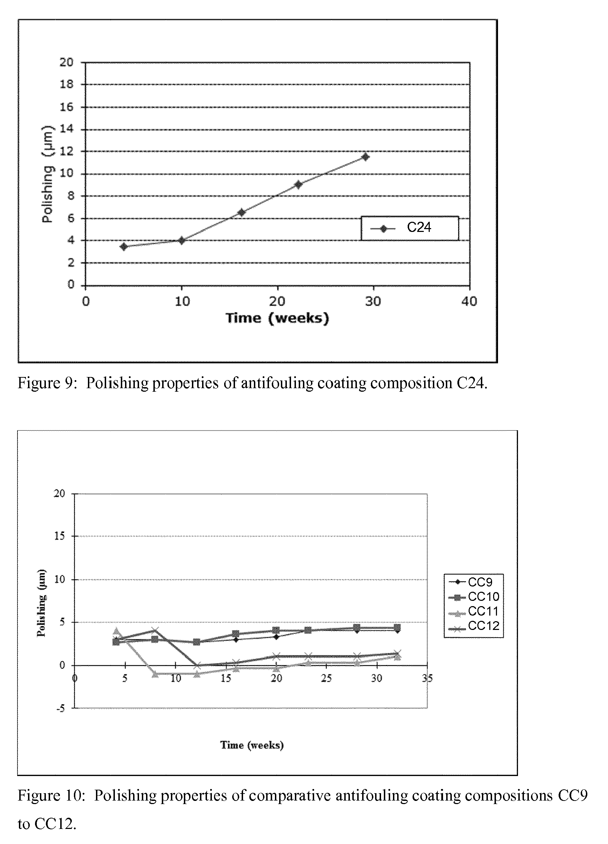

Another polyoxalate with high molecular weight and only diethyloxalate as diester (POC-3) gave sufficient hardness but showed no polishing or swelling when exposed to seawater, see the data for CC9 to CC12 and Figure 10.

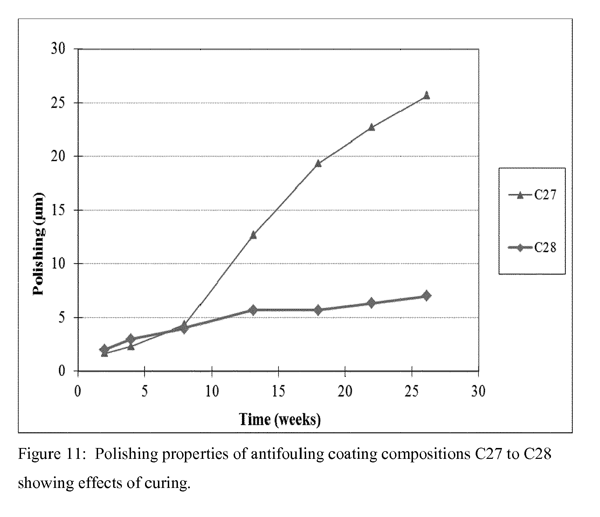

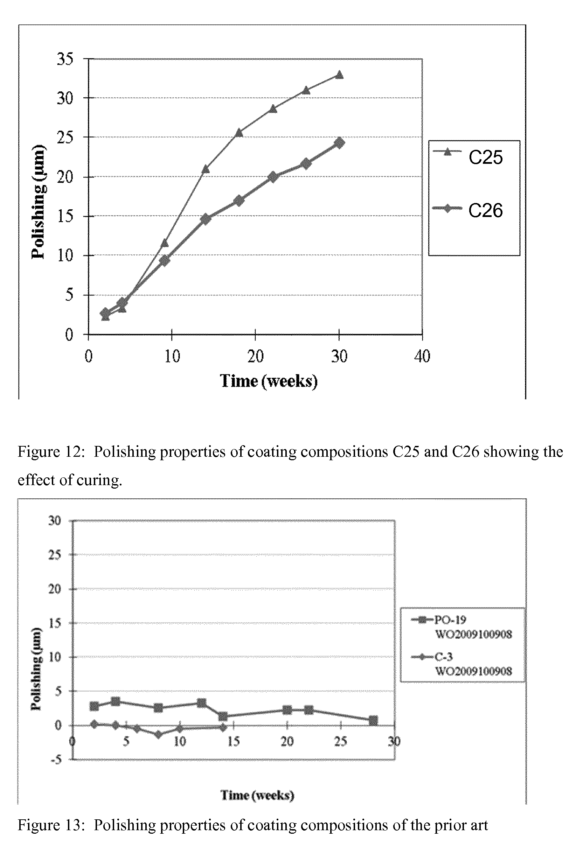

Figure 11 and 12 show the attainment of a more linear polishing rate when the antifouling coating composition is cured.
The inventive antifouling coating compositions show a good balance of properties. In particular they possess acceptable film hardness and good polishing properties, in particular linear polishing rates. They also offer improved properties over the closest known coating compositions of the prior art (in WO 2009/100908), the polishing behaviour of which is shown in Figure 13.

## Claims

1. A marine antifouling coating composition comprising:
1) a polyoxalate polymer with a Mw of at least 4000 g/mol, wherein said polyoxalate comprises:
(i) a residue of an oxalate monomer selected from oxalic acid or a diester derivative thereof;
(ii) a residue of a second monomer selected from a cyclic diester or cyclic diacid; and
(iii) a residue of a third monomer which is a diol;
2) a curing agent; and optionally
3) a marine antifouling agent.

2. A cured marine antifouling coating composition comprising:
1) a polyoxalate polymer with a Mw of at least 4000 g/mol, wherein said polyoxalate comprises:
(i) a residue of an oxalate monomer selected from oxalic acid or a diester derivative thereof;
(ii) a residue of a second monomer selected from a cyclic diester or cyclic diacid; and
(iii) a residue of a third monomer which is a diol; and
2) optionally a marine antifouling agent;
wherein said composition has been cured using a curing agent.

3. A marine antifouling coating composition according to claim 1 or 2, wherein said oxalate monomer is selected from oxalic acid and a dialkyl oxalate.

4. A marine antifouling coating composition according to any of claims 1 to 3, wherein said oxalate monomer is a dialkyl oxalate preferably selected from dimethyl oxalate, diethyl oxalate, dipropyl oxalate or dibutyl oxalate, preferably diethyl oxalate.

5. A marine antifouling coating composition according to any of claims 1 to 4, wherein said oxalate monomer (i) is present in an amount of 20-40 mol% relative to the amount of monomers in the polyoxalate in total.

6. A marine antifouling coating composition according to any of claims 1 to 5, wherein said second monomer (ii) is an aromatic diester or aromatic diacid.

7. A marine antifouling coating composition according to any of claims 1 to 6, wherein both monomers (i) and (ii) are diesters.

8. A marine antifouling coating composition according to any of claims 1 to 7, wherein said second monomer (ii) is dimethyl isophthalate.

9. A marine antifouling coating composition according to any of claims 1 to 8, wherein the second monomer (ii) is present in an amount of 5 to 30 mol% relative to the amount of monomers in the polyoxalate in total.

10. A marine antifouling coating composition according to any of claims 1 to 9, wherein the third monomer (iii) is a diol selected from the group consisting of saturated aliphatic and saturated cycloaliphatic diols.

11. A marine antifouling coating composition according to any of claims 1 to 10, wherein the Mw of the polyoxalate is at least 5000 g/mol.

12. A marine antifouling coating composition according to any of claims 1 to 11 comprising one or more solvents, e.g. xylene.

13. A kit suitable for the preparation of a marine antifouling coating composition comprising a first part (A)
1) a polyoxalate polymer with a Mw of at least 4000 g/mol, wherein said polyoxalate comprises:
(i) a residue of an oxalate monomer selected from oxalic acid or a diester derivative thereof;
(ii) a residue of a second monomer selected from a cyclic diester or cyclic diacid; and
(iii) a residue of a third monomer which is a diol; and
a second part (B) comprising a curing agent.

14. A process for the preparation of a marine anti-fouling coating composition comprising polymerising
(i) an oxalate monomer selected from oxalic acid or a diester derivative thereof;
(ii) a second monomer which is a cyclic diester or cyclic diacid; and
(iii) a third monomer which is a diol so as to form a polyoxalate polymer with a Mw of at least 4000 g/mol; and blending said polyoxalate with a curing agent and optionally a marine antifouling agent;
and curing the composition

15. An object coated with an optionally cured antifouling coating as claimed in any of claims 1 to 12.
